(19) **Europäisches Patentamt European Patent Office Office européen des brevets**

(11) **EP 4 202 563 B1**

(12) **FASCICULE DE BREVET EUROPEEN**

(45) Date de publication et mention de la délivrance du brevet:
**05.11.2025 Bulletin 2025/45**

(51) Classification Internationale des Brevets (IPC):
**G04B 13/00** *(2006.01)* **F16H 49/00** *(2006.01)*

(52) Classification Coopérative des Brevets (CPC):
**G04B 13/00; F16H 49/00**

(21) Numéro de dépôt: **21217315.7**

(22) Date de dépôt: **23.12.2021**

(54) **MÉCANISME HORLOGER MUNI D'UN ENGRENAGE MAGNÉTIQUE**

UHRWERKSMECHANISMUS MIT EINEM MAGNETISCHEN GETRIEBERAD

TIMEPIECE MECHANISM PROVIDED WITH A MAGNETIC GEAR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**28.06.2023 Bulletin 2023/26**

(73) Titulaire: **The Swatch Group Research and Development Ltd 2074 Marin (CH)**

(72) Inventeurs:
• **IMBODEN, Matthias 2072 St-Blaise (CH)**
• **MIGNOT, Jean-Pierre 25300 Pontarlier (FR)**
• **NICOLAS, Cédric 2000 Neuchâtel (CH)**
• **LIVAT, Nicolas 2088 Cressier (CH)**

(74) Mandataire: **ICB SA Faubourg de l'Hôpital, 3 2001 Neuchâtel (CH)**

(56) Documents cités:
**EP-B1- 2 889 701        EP-B1- 2 889 704
EP-B1- 2 894 522        CH-A2- 711 932
FR-A- 875 409           IT-A1- VR20 130 119
US-A1- 2020 076 289**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

Domaine technique de l'invention

L'invention concerne le domaine des engrenages magnétiques horloger qui sont formés d'une première roue et d'une deuxième roue en relation d'engrènement magnétique.

L'invention concerne un mécanisme horloger incorporant un tel engrenage magnétique. L'invention concerne également une pièce d'horlogerie comprenant un tel mécanisme. Une telle pièce d'horlogerie peut en particulier être une montre-bracelet.

Arrière-plan technologique

Les engrenages magnétiques sont des dispositifs connus qui peuvent être utilisés pour transférer un couple mécanique entre deux pièces sans aucun contact direct entre les pièces, et donc sans provoquer d'usure ou de friction entre ces pièces. De tels engrenages procurent les avantages suivants :

- aucune huile ou lubrifiant n'est nécessaire car il n'y a pas d'usure mécanique sur les dents des pièces ;
- les pièces dentées peuvent interagir et transférer le couple et la puissance mécanique même si elles sont séparées hermétiquement ; et
- les pièces dentées peuvent être utilisées pour limiter le couple maximal, et peuvent ainsi aider à éviter des dommages par exemple lors d'un choc mécanique.

Un tel engrenage magnétique comporte typiquement deux roues en relation d'engrènement magnétique. Une première roue est munie de premiers pôles magnétiques permanents, qui sont typiquement alternés et agencés circulairement et définissent une première denture magnétique. Ces premiers pôles magnétiques sont par exemple définis par des aimants bipolaires ayant une aimantation radiale, de préférence alternée. Une deuxième roue est munie de dents en matériau ferromagnétique doux ou de deuxièmes pôles magnétiques, par exemple définis par des aimants bipolaires ayant également des polarités alternées ; ces dents ou deuxièmes pôles magnétiques étant agencés circulairement et définissant une deuxième denture magnétique. Les première et deuxième roues sont typiquement situées dans un même plan général, bien que des dentures superposées soit envisageables lorsqu'elles sont toutes deux formées par des pôles aimantés de manière permanente. Le couplage magnétique entre les dentures des première et deuxième roues a pour conséquence que, lorsqu'une de ces première et deuxième roues est entraînée en rotation, l'autre roue est également entraînée en rotation. Il y a donc transmission d'un couple mécanique dans l'engrenage magnétique, ce qui correspond généralement à la fonction d'un engrenage comme divulgué dans la demande FR 875 409 A par exemple.

Toutefois, un inconvénient de ce type d'engrenage magnétique est que le couple mécanique maximum qui est transférable entre les deux roues (sans glissement ou patinage dans l'engrenage) est limité par divers facteurs. Il existe donc un besoin de pouvoir disposer d'un engrenage magnétique offrant un plus grand couple mécanique maximum transférable.

Pour ce faire, une solution intuitive consiste à utiliser des roues ayant des diamètres de dents plus élevés, et à minimiser la distance séparant les deux roues. L'interaction magnétique prévue entre les dents des deux roues empêche toutefois de pouvoir prévoir un espacement suffisamment étroit entre des dents adjacentes de l'une ou l'autre des deux roues. Rapprocher les deux dentures à très faible distance sans qu'elle n'entrent en contact pose un réel problème de tolérances. Dans le cadre de l'invention, deux problèmes principaux liés aux engrenages magnétiques ont été identifiés. Un premier problème principal découle du fait qu'un couple de positionnement (couple magnétique parasite) s'exerce périodiquement sur la roue entraîneuse en rotation. Par « couple magnétique », on comprend un couple de force magnétique. Le couple de positionnement à vaincre est un phénomène qui résulte du fait qu'il existe un minimum d'énergie dans l'engrenage magnétique lorsque les deux roues ont deux dents respectives qui sont alignées. Le couple de positionnement tend à ramener les deux roues dans une position d'énergie minimum. En fonctionnement, il s'oppose donc périodiquement à la rotation de la roue entraîneuse. Ce couple magnétique parasite peut être important, éventuellement aussi grand (voire même plus grand) que le couple mécanique pouvant être transmis entre les deux roues de l'engrenage magnétique. Pour vaincre ce couple perturbateur, un dispositif moteur entraînant une des deux roues doit pouvoir fournir un couple de force bien supérieur au couple de force mécanique transmis dans l'engrenage magnétique, ce qui augmente inutilement la consommation en énergie de ce moteur. Dans tous les cas, et en supposant que la première roue est une roue entraîneuse et que la deuxième roue est entraînée par la première roue, le couple mécanique transférable peut ne pas être limité par l'interaction magnétique entre les roues, mais par le couple mécanique minimum provenant de la première roue. Dans l'engrenage magnétique typique considéré ici, le couple mécanique que doit pouvoir fournir la première roue doit être égal au couple de positionnement maximal (couple magnétique parasite) additionné au couple mécanique à pouvoir transmettre dans / au travers de l'engrenage magnétique.

Le deuxième problème important, auquel répond principalement la présente invention, provient du fait que le couple mécanique maximum transférable dans l'engrenage magnétique typique susmentionné est limité par une modulation du couple magnétique intervenant dans l'engrenage magnétique lorsqu'il est en activité. En effet, lorsque les deux roues tournent, leurs deux dentures magnétiques respectives passent alternativement d'une première situation, dans laquelle une dent magnétique d'une de ces deux dentures magnétiques est alignée sur un axe passant par les centres des deux roues, à une deuxième situation où deux dents magnétiques adjacentes de cette denture magnétique sont dans des positions angulaires symétriques relativement à cet axe passant par les centres des deux roues. On observe une diminution du couple magnétique exercé par la roue entraîneuse sur la roue entraînée entre la première situation et la deuxième situation, et donc à une variation du couple mécanique maximum transférable dans l'engrenage. Ainsi, le couple mécanique maximum transmis dans l'engrenage est limité par le minimum du couple magnétique entre les deux roues lorsqu'elles sont entraînées en rotation.

<u>Résumé de l'invention</u>

L'invention a donc pour objectif de pallier les inconvénients de l'art antérieur identifiés ci-avant en procurant un mécanisme horloger comprenant un engrenage magnétique qui soit simple à fabriquer et à monter dans le mécanisme horloger, notamment pour ce qui concerne les tolérances de fabrication et de positionnement relatif des dentures magnétiques, et qui permette d'augmenter le couple mécanique maximum transférable dans l'engrenage (sans glissement d'une roue relativement à l'autre dans cet engrenage).

A cet effet, la présente invention concerne un mécanisme horloger comprenant un engrenage magnétique comportant une première roue et une deuxième roue. La première roue est munie de premiers pôles magnétiques permanents qui sont agencés de manière à former les dents aimantées d'une première denture magnétique desquelles sortent respectivement des premiers flux magnétiques ayant des polarités alternées, et la deuxième roue est munie de dents en matériau ferromagnétique doux définissant une deuxième denture magnétique, la première roue et la deuxième roue étant agencées de manière que la première denture magnétique présente un premier couplage magnétique avec la deuxième denture magnétique généré par les premiers flux magnétiques qui polarisent momentanément, en attraction magnétique, des dents de la deuxième denture magnétique, lesquelles sont momentanément situées dans une première zone de couplage magnétique avec la première denture magnétique et alors traversées respectivement par des premiers flux magnétiques parmi lesdits premiers flux magnétiques, de sorte que les première et deuxième roues engrènent magnétiquement l'une avec l'autre, l'engrenage magnétique définissant un premier demi-axe de référence partant de l'axe de rotation de la deuxième roue et interceptant l'axe de rotation de la première roue. Selon l'invention, l'engrenage magnétique comprend en outre une troisième roue munie de deuxièmes pôles magnétiques permanents qui sont agencés de manière à former les dents aimantées d'une troisième denture magnétique desquelles sortent respectivement des deuxièmes flux magnétiques ayant des polarités alternées. La troisième roue et la deuxième roue sont agencées de manière que la troisième denture magnétique présente un deuxième couplage magnétique avec la deuxième denture magnétique généré par lesdits deuxièmes flux magnétiques qui polarisent momentanément, en attraction magnétique, des dents de la deuxième denture magnétique, lesquelles sont momentanément situées dans une deuxième zone de couplage magnétique avec la troisième denture magnétique et alors traversées respectivement par des deuxièmes flux magnétiques parmi lesdits deuxièmes flux magnétiques, de sorte que les deuxième et troisième roues engrènent magnétiquement l'une avec l'autre, l'engrenage magnétique définissant un deuxième demi-axe de référence partant de l'axe de rotation de la deuxième roue et interceptant l'axe de rotation de la troisième roue. Le premier demi-axe de référence et le deuxième demi-axe de référence présentent entre eux un angle $\Phi$ donné. Les premiers pôles magnétiques permanents (donc les dents aimantées / la denture magnétique) de la première roue présentent une première phase relativement au premier demi-axe de référence, et les deuxièmes pôles magnétiques permanents (donc les dents aimantées / la denture magnétique) de la troisième roue présentent une deuxième phase relativement au deuxième demi-axe de référence. L'engrenage magnétique est agencé de manière que, à tout instant, un déphasage entre les première et troisième roues, défini comme la différence entre lesdites première et deuxième phases, est constant. L'angle $\Phi$ et le déphasage sont sélectionnés de sorte à déterminer sensiblement la valeur d'un couple mécanique maximum transférable dans l'engrenage magnétique sans glissement dans cet engrenage magnétique, c'est-à-dire sans glissement entre la deuxième roue et les première et troisième roues.

La phase de la première roue, respectivement de la troisième roue, c'est-à-dire la phase des premiers pôles magnétiques permanents, respectivement des deuxièmes pôles magnétiques permanents (à savoir des dents aimantées de la première denture magnétique, respectivement de la troisième denture magnétique), est défini, à un instant donné, par l'angle d'un de ces pôles magnétiques permanents (d'une de ces dents aimantées), relativement au premier demi-axe, respectivement au deuxième demi-axe, modulo la période angulaire de la première denture magnétique, respectivement de la troisième denture magnétique (soit la distance angulaire entre deux dents aimantées adjacentes de cette denture magnétique), le tout divisé par cette période angulaire et multiplié par 360°. Un déphasage est donné par une différence de deux phases. On notera qu'un déphasage β est identique à un déphasage β - 360°. Ainsi, un déphasage dont la valeur passe, selon les valeurs instantanées des deux phases considérées, de β à β - 360°, dans un sens ou l'autre sens, reste un déphasage constant (par exemple, un déphasage égal à 90° et un déphasage égal à -270° définissent un seul et même déphasage, de sorte qu'un déphasage dont la valeur varie entre ces deux valeurs est un déphasage constant).

De manière générale, le fait de prévoir dans l'engrenage magnétique une troisième roue, munie de pôles magnétiques permanents et couplée magnétiquement à la deuxième roue, permet de sélectionner un couple mécanique maximum transférable sans glissement dans l'engrenage en sélectionnant à cet effet ledit angle Φ et ledit déphasage de manière appropriée. En particulier, la troisième roue permet d'augmenter, pour un couple moteur donné, le couple mécanique maximum transférable sans glissement dans l'engrenage magnétique (autrement dit, sans décrochage dans la liaison cinématique prévue pour cet engrenage, c'est-à-dire dans l'engrènement magnétique entre la deuxième roue et les première et troisième roues). Un tel avantage provient du fait qu'il existe une variation importante du couple magnétique total maximum dans l'engrenage magnétique en fonction du décalage angulaire α entre les première et troisième roues et en fonction dudit déphasage entre les première et troisième roues. Le décalage angulaire α est défini comme égal à l'angle Φ susmentionné modulo la période P$_2$ de la denture magnétique de la deuxième roue. En outre, un tel engrenage magnétique avec deux roues à dents aimantées couplées magnétiquement à une autre roue à dents en matériau ferromagnétique permet de disposer de davantage de couple mécanique pour maintenir toutes les roues à l'arrêt quelles que soient les positions angulaires des roues de l'engrenage magnétique au repos. Ceci est particulièrement avantageux dans le cadre d'un mécanisme dynamique, à inertie limitée.

De préférence, l'angle Φ et le déphasage entre les première et troisième roues sont sélectionnés de sorte que le couple mécanique maximum transférable, c'est-à-dire sans glissement d'une roue sur l'autre dans l'engrenage magnétique, est supérieur à deux fois un couple mécanique maximum correspondant qui est transférable par un autre engrenage magnétique qui ne comporte que la première roue et la deuxième roue. En effet, chacune des première et troisième roues est limitée, pour le couple mécanique maximum transférable, par le minimum du couple magnétique entre cette roue et la deuxième roue en fonction de la position angulaire de l'une ou l'autre de ces deux roues, ce minimum déterminant une valeur maximum pour le couple mécanique transférable d'une roue sur l'autre. Or, lorsque les première et troisième roues présentent un décalage angulaire et un déphasage sélectionnés de manière appropriée, on observe un décalage entre les deux minima des deux couples magnétiques respectifs tel que le minimum des deux couples magnétiques additionnées (couple magnétique total) peut être supérieur au double du minimum pour un seul des deux couples magnétiques. Cette propriété est remarquable.

Dans une variante avantageuse, la première denture magnétique et la troisième denture magnétique comportent chacune un même nombre N1 de dents, et les première et troisième roues sont positionnées angulairement, relativement à l'axe de rotation de la deuxième roue, de manière que ledit angle Φ satisfait la relation mathématique :

$$\left(N - \frac{2}{3}\right) \cdot \frac{360°}{N2} \leq \Phi = \Phi(N) \leq \left(N - \frac{1}{3}\right) \cdot \frac{360°}{N2}$$

où N2 est le nombre de dents de la deuxième denture magnétique (10) et N est un nombre entier positif inférieur à N2. Cette plage de valeurs pour l'angle Φ(N) donne de bons effets en termes de couple mécanique maximum transférable pour l'engrenage (pour certaines plages du déphasage entre les pôles magnétiques permanents des première et troisième roues associées respectivement aux valeurs de la plage de valeurs).

De préférence, la valeur de l'angle Φ(N) est sélectionnée de sorte à être sensiblement égale à

$$\left(N - \frac{1}{2}\right) \cdot \frac{360°}{N2}$$

Cette valeur optimale pour l'angle Φ(N) donne les meilleurs effets en termes de couple mécanique maximum transférable pour l'engrenage (pour une certaine plage du déphasage entre les pôles magnétiques permanents des première et troisième roues autour d'un déphasage optimal défini par la suite). Typiquement, La valeur optimale de l'angle Φ(N) peut donner, pour certaines valeurs de déphasage entre les pôles magnétiques permanents des première et troisième roues, un couple mécanique maximum transférable supérieur à deux fois le couple mécanique maximum transférable produit par un autre engrenage ne comportant que la première roue et la deuxième roue.

Dans une autre variante avantageuse, la première denture magnétique et la troisième denture magnétique comportent aussi chacune un même nombre **N1** de dents, deux dents déterminées appartenant respectivement à ces première et troisième dentures magnétiques présentant, relativement aux premier et deuxième demi-axes respectifs et à tout instant, une différence angulaire Ψ constante donnée. Les première et troisième roues sont positionnées angulairement, relativement aux premier et deuxième demi-axes respectifs, de manière que la différence angulaire Ψ satisfait la relation mathématique :

$$\left(M - \frac{2}{3}\right) \cdot \frac{360°}{N1} \leq \Psi = \Psi(M) \leq \left(M - \frac{1}{3}\right) \cdot \frac{360°}{N1}$$

où M est un nombre entier positif inférieur à N1 qui dépend des deux dents déterminées, c'est-à-dire sélectionnées pour mesurer la différence angulaire. Cette plage de valeurs pour la différence angulaire $\Psi(M)$ donne de bons effets en termes de couple mécanique maximum transférable pour l'engrenage (pour certaines plages du décalage angulaire entre les première et troisième roues associées respectivement aux valeurs de la plage de valeurs).

De préférence, la valeur de la différence angulaire $\Psi(M)$ est sélectionnée de sorte à être sensiblement égale à

$$\left(M - \frac{1}{2}\right) \cdot \frac{360°}{N1}$$

Cette valeur optimale pour la différence angulaire $\Psi(M)$ donne les meilleurs effets en termes de couple mécanique maximum transférable pour l'engrenage (pour une certaine plage du décalage angulaire entre les première et troisième roues autour d'un décalage angulaire optimal correspondant à l'angle $\Phi(N)$ optimal pour tout N). Typiquement, cette valeur optimale de $\Psi(M)$ peut donner, pour certaines valeurs du décalage angulaire des première et troisième roues, un couple mécanique maximum transférable supérieur à deux fois le couple mécanique maximum transférable produit par un autre engrenage ne comportant que la première roue et la deuxième roue. On définit le déphasage angulaire comme la différence angulaire $\Psi(M)$ modulo la période de la première denture (égale à celle de la troisième denture). Le déphasage angulaire $\delta$ est donc identique pour tout M. De même, le décalage angulaire $\alpha$, mentionné précédemment, est identique pour tout N. La combinaison du décalage angulaire $\alpha$ préféré / optimal, correspondant à l'angle $\Phi(N)$ optimal pour tout **N,** et du déphasage angulaire $\delta$ préféré / optimal, correspondant à la différence angulaire $\Psi(M)$ préférée / optimale pour tout M, donne le meilleur résultat en terme de couple mécanique maximum transférable.

Selon un exemple de réalisation de l'invention, les première et troisième roues sont disposées sensiblement de part et d'autre de la deuxième roue, la deuxième roue étant ainsi agencée sensiblement entre les première et troisième roues. Ceci permet d'équilibrer les forces radiales magnétiques agissant sur la deuxième roue.

Dans une variante avantageuse, les première et troisième roues sont entraîneuses et la deuxième roue est entraînée.

Selon un exemple de réalisation de l'invention, les dents aimantées de la première denture, respectivement de la troisième denture, sont agencées de manière que les premiers flux magnétiques, respectivement les deuxièmes flux magnétiques, sortent de ces dents aimantées avec une direction principale radiale relativement à l'axe de rotation de la première roue, respectivement de la troisième roue.

Selon un premier mode de réalisation particulier, le mécanisme comporte en outre deux moteurs, de préférence deux moteurs Lavet, le rotor de chacun des deux moteurs étant relié cinématiquement à une roue respective parmi les première et troisième roues, pour entraîner en rotation ladite roue respective, les deux moteurs étant configurés pour entraîner au moins en partie simultanément les première et troisième roues.

Selon un deuxième mode de réalisation particulier, le mécanisme comporte en outre un moteur, de préférence un moteur Lavet, dont le rotor est relié cinématiquement aux première et troisième roues, pour entraîner en rotation ces roues, les première et troisième roues étant couplées mécaniquement, en particulier via un train d'engrenages.

Avantageusement, les première et troisième roues présentent un même diamètre et chacune une denture ayant un même nombre de dents, et la distance séparant ces deux roues est supérieure à quatre fois, de préférence supérieure à huit fois leur diamètre. Ceci permet d'éviter quasi toute interaction magnétique parasite entre les première et troisième roues.

De préférence, la première roue, respectivement la troisième roue, présente une partie centrale en matériau ferromagnétique, en périphérie de laquelle sont agencés par paires ses dits premiers pôles magnétiques permanents, respectivement ses dits deuxièmes pôles magnétiques permanents, avec respectivement autant de pôles magnétiques complémentaires, formant ainsi des aimants bipolaires présentant une aimantation radiale et définissant les dents aimantées de la première denture magnétique, respectivement de la troisième denture magnétique. Ceci permet de refermer efficacement les lignes des champs magnétiques entre aimants bipolaires adjacents via la partie centrale de la première roue, respectivement la troisième roue.

Avantageusement, la deuxième roue comprend une jante formant une base circulaire continue pour la deuxième denture magnétique qui s'élève depuis cette jante, laquelle est constituée d'un matériau ferromagnétique doux de sorte à former une fermeture pour des chemins magnétiques desdits premiers flux magnétiques et desdits deuxièmes flux magnétiques traversant la deuxième denture.

Selon un exemple de réalisation particulier de l'invention, les première, deuxième et troisième roues sont coplanaires. Selon un autre exemple de réalisation particulier de l'invention, les première, deuxième et troisième roues peuvent s'étendre dans des plans distincts.

Avantageusement, le mécanisme comprend en outre, pour chacune des première et troisième roues, un élément ferromagnétique doux ou un ensemble d'éléments ferromagnétiques doux agencé relativement à cette roue de sorte à engendrer un couple magnétique de compensation pour compenser au moins une majeure partie d'un couple magnétique de positionnement que subit individuellement chacune des première et troisième roues et résultant du couplage magnétique de cette roue avec la deuxième denture magnétique de la deuxième roue. Le couple magnétique de positionnement susmentionné a une variation d'intensité périodique en fonction de la position angulaire de la roue concernée relativement au demi-axe de référence partant de l'axe de rotation de la deuxième roue et interceptant l'axe de rotation de cette roue. L'élément ferromagnétique ou l'ensemble d'éléments ferromagnétiques est agencé avantageusement de manière à engendrer un couple magnétique de compensation qui présente également une variation d'intensité périodique en fonction de la position angulaire de la roue concernée relativement au demi-axe de référence associé à cette roue, le couple magnétique de compensation et le couple magnétique de positionnement individuel présentant de préférence un déphasage de 180°.

La présence d'un élément ferromagnétique doux ou d'un ensemble d'éléments ferromagnétiques doux ainsi configuré permet de pallier quasi en majeure partie le problème du couple de force magnétique de positionnement que subit chacune des première et troisième roues, en éliminant en majeure partie ce couple parasite et ainsi en réduisant au mieux le couple de positionnement global que subit la deuxième roue et ensemble les première et troisième roues. Plus précisément, la variation du couplage magnétique engendre, sur chacune des première et troisième roues lorsqu'elles sont entraîneuses dans l'engrenage magnétique, une variation de couple mécanique fourni par un dispositif moteur. La présence d'un tel élément ferromagnétique ou d'un tel ensemble d'éléments ferromagnétiques permet par conséquent de diminuer, pour chacune des première et troisième roues, l'amplitude de cette variation, sans que ceci n'ait de répercussion sensible sur le couplage magnétique dans l'engrenage magnétique. Autrement dit, le fait de 'lisser' le couple mécanique à fournir aux première et troisième roues ne modifie quasiment pas la variation du couplage magnétique entre la deuxième roue et les première et troisième roues, cette variation étant une fonction de la position angulaire de la deuxième denture par rapport aux pôles magnétiques de la première roue, respectivement de la troisième roue, cette dernière variation étant compensée de manière significative par l'agencement de l'engrenage magnétique selon l'invention.

On notera que l'engrenage magnétique selon l'invention permet en outre de réduire de manière significative le couple de positionnement global par l'agencement des première et troisième roues grâce au décalage angulaire $\alpha$ et au déphasage prévus entre ces première et troisième roues, lesquels ont été exposés précédemment. En effet, il résulte de l'agencement des variantes avantageuses relatives au décalage angulaire $\alpha$ et au déphasage, et plus particulièrement des valeurs optimales identifiées pour ces deux paramètres, que la deuxième roue subit deux couples magnétiques de positionnement, engendrés respectivement par les première et troisième roues, qui sont déphasés, de sorte que le couple de positionnement global auquel est soumise la deuxième roue est bien moindre que dans le cas de l'art antérieur, c'est-à-dire sans la troisième roue. En particulier dans le cas où les première et troisième roues sont solidaires en rotation, cet ensemble de deux roues subit aussi globalement un moindre couple de positionnement, lequel est alors sensiblement égal au couple de positionnement global qui s'exerce sur la deuxième roue. On observe donc que l'engrenage magnétique selon l'invention permet de résoudre de manière efficace les deux problèmes principaux identifiés dans la réalisation de l'art antérieur décrite dans l'arrière-plan technologique, permettant à cet engrenage magnétique de transmettre, de manière stable et sûre, un plus grand couple mécanique, et ceci avec un moindre couple moteur.

L'invention concerne également une pièce d'horlogerie, notamment une montre-bracelet, comportant le mécanisme de l'invention.

<u>Brève description des figures</u>

Les buts, avantages et caractéristiques du mécanisme selon l'invention apparaîtront mieux dans la description suivante de diverses formes d'exécution non limitatives, illustrées par les dessins dans lesquels :

- la figure 1 est une vue de dessus d'un mécanisme incorporant un engrenage magnétique selon une variante particulière l'invention ;

- la figure 2 est une vue de dessus, similaire à la figure 1, d'un premier mode de réalisation du mécanisme selon l'invention, l'engrenage magnétique du mécanisme comprenant deux petites roues et une roue plus grande ;

- la figure 3A est un ensemble de plusieurs graphes représentant l'évolution d'un couple mécanique maximum transférable dans l'engrenage magnétique en fonction d'un déphasage angulaire entre les deux petites roues du mécanisme de la figure 2, pour différentes valeurs d'un décalage angulaire des deux petites roues relativement à l'axe de rotation de la grande roue ;

- la figure 3B est un ensemble de plusieurs graphes représentant l'évolution d'un couple mécanique maximum transférable dans l'engrenage magnétique en fonction du décalage angulaire entre les deux petites roues du mécanisme de la figure 2, pour différentes valeurs du déphasage angulaire entre les deux petites roues ;

- la figure 4A est un graphe montrant l'évolution d'un déphasage angulaire optimal des deux petites roues du mécanisme de la figure 2, en fonction d'un décalage angulaire entre ces deux petites roues ;

- la figure 4B est un graphe, similaire à celui de la figure 4A, qui représente l'évolution d'un déphasage optimal, exprimé sur une échelle de zéro à un, des deux petites roues du mécanisme de la figure 2, en fonction d'un décalage, également exprimé sur une échelle de zéro à un, entre ces deux petites roues, ainsi qu'une zone pour ces deux paramètres donnant un couple mécanique maximum transféré dans l'engrenage magnétique relativement élevé ;

- la figure 5 est une vue de dessus d'une première variante d'un deuxième mode de réalisation du mécanisme de l'invention ;

- la figure 6 est une vue en coupe transversale du mécanisme de la figure 5, prise selon le plan de coupe VI-VI ;

- la figure 7 est une vue de dessus d'une deuxième variante du deuxième mode de réalisation du mécanisme de l'invention ;

- la figure 8 est une vue en coupe transversale du mécanisme de la figure 7, prise selon le plan de coupe VIII-VIII ; et

- la figure 9 est une vue analogue à celle de la figure 5, selon une variante améliorée du deuxième mode de réalisation du mécanisme de l'invention.

Description détaillée de l'invention

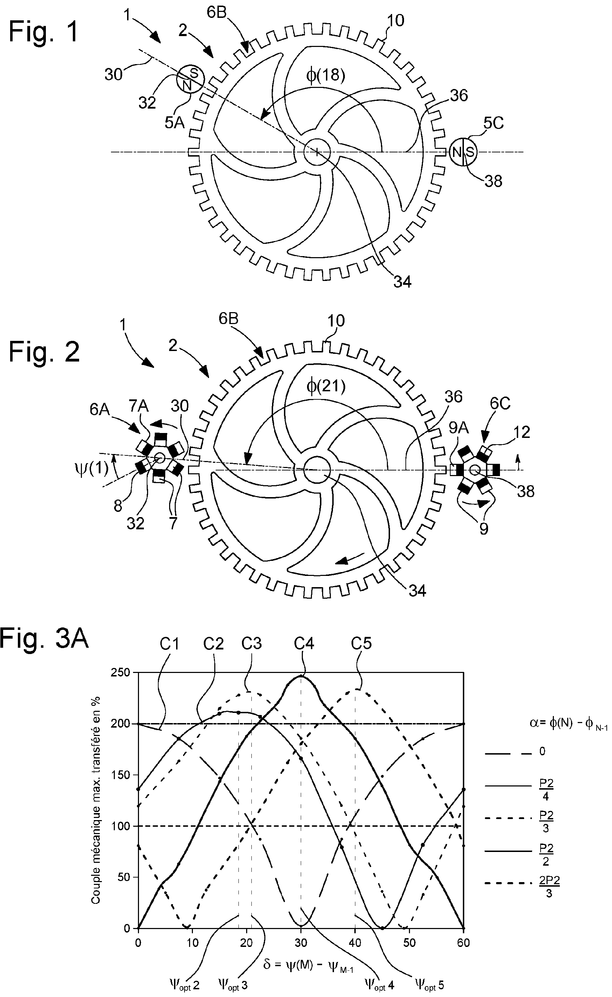

Sur la figure 1 est représenté une variante particulière du mécanisme horloger 1 selon l'invention, comprenant un engrenage magnétique 2 pour exposer le concept général de l'invention. La présente invention agence un engrenage magnétique 2 comportant deux roues, notamment de petit diamètre et ayant des dimensions propres à un pignon, chacune munie de pôles magnétiques permanents qui sont agencés circulairement autour de l'axe de rotation 32, 38 de la roue respective, ces deux roues étant couplées magnétiquement à une autre roue 6B, notamment de plus grand diamètre, munie de dents en matériau ferromagnétique doux à relativement haute perméabilité magnétique. Soit les deux petites roues sont entraîneuses et la grande roue est entraînée, soit c'est le contraire. Sur la figure 1, les deux petites roues sont chacune formée par un simple élément rotatif 5A, 5C formé par un aimant bipolaire circulaire 5A, 5C (en forme de disque) avec un axe de rotation central 32, 38 perpendiculaire à l'axe magnétique de cet aimant bipolaire. On remarquera que l'aimant bipolaire peut avoir une autre forme, notamment rectangulaire. Chaque aimant bipolaire 5A, 5C produit un champ magnétique qui est couplé à la grande roue 6B dans une région respective de cette grande roue définissant une zone de couplage magnétique respective avec l'aimant bipolaire rotatif correspondant. Les deux aimants bipolaires rotatifs 5A, 5C sont alors chacun en relation d'engrènement magnétique avec la roue 6B qui est de préférence une roue de plus grand diamètre, avantageusement située entre les deux aimants bipolaires. Chaque aimant bipolaire rotatif 5A, 5C génère des flux magnétiques permettant de polariser magnétiquement, momentanément et localement, la denture magnétique de la roue 6B.

Le champ magnétique généré par chacun des aimants bipolaires rotatifs 5A, 5C produit ainsi une aimantation locale et temporaire sur la roue 6B, plus précisément dans des dents en matériau ferromagnétique doux de cette roue 6B qui sont actives à un instant donné, c'est-à-dire se trouvant momentanément dans une zone d'engrènement magnétique qui correspond par définition à la zone de couplage magnétique prévue entre la roue 6B et l'aimant bipolaire concerné. Le nombre de pôles magnétiques permanents de chacune des roues schématisées par un élément rotatif 5A, 5B, qui sont nécessaires pour générer une telle aimantation locale, est réduit au minimum à deux pôles magnétiques formant un aimant bipolaire.

L'engrenage magnétique 2 définit un premier demi-axe de référence 30 partant de l'axe de rotation 34 de la roue 6B de plus grand diamètre et interceptant l'axe de rotation 32 d'une première des deux petites roues, schématisée sur la figure 1 par un premier aimant bipolaire rotatif 5A. L'engrenage magnétique 2 définit également un deuxième demi-axe de référence 36 partant de l'axe de rotation 34 de la roue 6B et interceptant l'axe de rotation 38 de la seconde petite roue, schématisée sur la figure 1 par un second aimant bipolaire rotatif 5B. Le premier demi-axe de référence 30 et le deuxième demi-axe de référence 36 présentent entre eux un angle $\Phi$ donné. Comme illustré sur la figure 1, l'angle $\Phi$ séparant les premier et deuxième demi-axes de référence 30, 36 est mesuré depuis le deuxième demi-axe de référence 36.

Comme illustré sur les figures 2, et 5 à 9, l'engrenage magnétique 2 comporte trois roues 6A, 6B, 6C. De manière générale, une première roue 6A et une troisième roue 6C, plus petites en diamètre que la deuxième roue 6B, sont chacune munies de **N1** pôles magnétiques permanents 7, 9 qui sont agencés circulairement et définissent une première denture magnétique 8, respectivement une troisième denture magnétique 12. De préférence, comme aux figures 2 et 7 à 9, les première et troisième roues 6A, 6C sont disposées sensiblement de part et d'autre de la deuxième roue 6B, la deuxième roue 6B étant ainsi agencée sensiblement entre les première et troisième roues 6A, 6C. De préférence encore, les première et troisième roues 6A, 6C sont entraîneuses et la deuxième roue 6B est entraînée en rotation par ces deux roues. Les trois roues 6A, 6B, 6C peuvent être coplanaires ou s'étendre dans des plans distincts.

Les **N1** pôles magnétiques permanents 7, 9 forment les dents aimantées de la première denture magnétique 8, respectivement de la troisième denture magnétique 12, desquelles sortent respectivement des premiers flux magnétiques, respectivement des deuxièmes flux magnétiques, ayant des polarités alternées. Comme les pôles magnétiques sont agencés de manière circulaire avec une polarisation alternée, leur nombre est un nombre pair. De préférence, le nombre **N1** est un nombre pair entre quatre et dix, y compris. Les pôles magnétiques 7, 9 de la première roue 6A, respectivement de la troisième roue 6C, sont typiquement agencés par paires avec autant de pôles magnétiques complémentaires, situés autour d'une partie centrale 32, 38 formant axe de la roue 6A, 6C ou dans une ouverture de laquelle passe un tel axe, ces paires de pôles magnétique formant ainsi des aimants bipolaires qui définissent par leurs pôles extérieurs les dents aimantées de la première denture magnétique 8, respectivement de la troisième denture magnétique 12. Dans le cas où la pluralité d'aimants bipolaires présentent une aimantation radiale, la partie centrale 32, 38 est avantageusement constituée d'un matériau ferromagnétique ou d'un matériau en mu-métal. Un tel matériau permet de refermer efficacement les lignes des champs magnétiques sortant des pôles magnétiques intérieurs de la pluralité d'aimants bipolaires, notamment entre aimants bipolaires adjacents, via la partie centrale de la première roue 6A, respectivement de la troisième roue 6C. Dans les exemples de réalisation particuliers illustrés sur les figures 2, et 5 à 9, chacune des première et troisième roues 6A, 6C comprend six aimants bipolaires 7, 9 formant respectivement les six dents aimantées de la première denture magnétique 8, respectivement de la troisième denture magnétique 12. De préférence, comme illustré sur les figures 2, 5, 7 et 9, les dents aimantées 7, 9 de la première denture 8, respectivement de la troisième denture 12, sont agencées de manière que les premiers flux magnétiques, respectivement les deuxièmes flux magnétiques, sortent de ces dents aimantées 7, 9 avec une direction principale qui est radiale relativement à l'axe de rotation de la première roue 6A, respectivement de la troisième roue 6C, les aimants bipolaires ayant ainsi une aimantation radiale.

La deuxième roue 6B est munie de N2 dents en matériau ferromagnétique doux définissant une deuxième denture magnétique 10. La deuxième roue 6B comprend une jante annulaire en matériau magnétique, typiquement en matériau ferromagnétique doux, de laquelle s'élèvent quarante-deux dents également en matériau ferromagnétique doux formant la deuxième denture magnétique 10. Une telle jante annulaire forme donc une base circulaire continue pour la deuxième denture magnétique 10, par laquelle se referment les chemins magnétiques des premiers et deuxièmes flux magnétiques d'interaction fournis respectivement par les première et troisième dentures magnétiques 8, 12.

A un quelconque instant, un des pôles magnétiques permanents 7A de la première roue 6A présente une première position angulaire relativement au premier demi-axe de référence 30, et un des pôles magnétiques permanents 9A de la troisième roue 6C présente une deuxième position angulaire relativement au deuxième demi-axe de référence 36. L'engrenage magnétique 2 est agencé de manière que, à tout instant, les première et troisième roues 6A, 6C sont positionnées angulairement, relativement à leurs demi-axes de référence respectifs, de manière que les première et deuxième positions angulaires présentent une différence angulaire $\Psi$ qui est constante. Les angles $\Phi$ et $\Psi$ sont sélectionnés, de manière générale, de sorte à déterminer la valeur d'un couple mécanique maximum transférable dans l'engrenage magnétique sans risque de glissement dans cet engrenage magnétique. En particulier, les angles $\Phi$ et $\Psi$ sont avantageusement sélectionnés de sorte que le couple mécanique maximum transférable, sans glissement possible dans l'engrenage magnétique 2, est supérieur à deux fois un couple mécanique maximum correspondant qui est transférable par un autre engrenage magnétique qui ne comporterait que la première roue 6A et la deuxième roue 6B. Les figures 3A à 4B, qui seront décrites par la suite, illustrent de telles valeurs pour les angles $\Phi$ et $\Psi$.

Dans une variante avantageuse, les première et troisième roues 6A, 6C sont positionnées angulairement par rapport à la deuxième roue 6B de manière que l'angle $\Phi$ satisfait la relation mathématique (1) suivante :

$$\left(N - \frac{2}{3}\right) \cdot \frac{360°}{N2} \leq \Phi = \Phi(N) \leq \left(N - \frac{1}{3}\right) \cdot \frac{360°}{N2} \qquad (1)$$

où N est un nombre entier positif inférieur à N2 (N est donc un nombre entier quelconque entre 1 et N2 - 1, soit N = 1, 2, ..., N2 - 1).

Cette sélection pour l'angle $\Phi$ découle de plusieurs simulations ayant donné notamment les différentes courbes C1, C2, C3, C4 et C5 tracées sur la figure 3A, qui représentent l'évolution du couple mécanique maximum transférable dans l'engrenage magnétique 2 (en %), pour différentes valeurs du décalage angulaire $\alpha = \Phi(N) - \Phi_{N-1}$, en fonction du déphasage angulaire $\delta = \Psi(M) - \Psi_{M-1}$. La période magnétique $P_2$ de la deuxième roue 6B est définie comme étant égale à $360°/N2$, et la période magnétique $P_1$ de chacune des première et troisième roues 6A, 6C est définie comme étant égale à 360°/N1. L'angle $\Phi_{N-1}$ est défini comme étant égal à $(N-1)\cdot P_2$ et l'angle $\Psi_{M-1}$ est défini comme étant égal à $(M-1)\cdot P_1$, avec M un nombre entier positif inférieur à N1 (M est donc un nombre entier quelconque entre 1 et N1 - 1, soit M = 1, 2, ..., N1 - 1). Le décalage angulaire $\alpha$ est compris entre $\Phi_{N-1}$ et $\Phi_N$, avec $\Phi_N$ égal à $N\cdot P_2$, et le déphasage angulaire $\delta$ est compris entre $\Psi_{M-1}$ et $\Psi_M$, avec $\Psi_M$ égal à $M\cdot P_1$. Ainsi, le décalage angulaire $\alpha$ est égal à $\Phi(1)$. La relation mathématique (1) est équivalente à la relation $P_2 / 3 \leq \alpha \leq 2\cdot P_2 / 3$ pour le décalage angulaire.

Les courbes C1, C2, C3, C4 et C5 représentent l'évolution du couple mécanique maximum transférable dans l'engrenage magnétique 2 (en %) en fonction du déphasage angulaire $\delta$, lorsque le décalage angulaire $\alpha$ est respectivement égal à zéro, $P_2/4$, $P_2/3$, $P_2/2$ et $2P_2/3$. Les courbes C3 et C5 sont sélectionnées pour les bornes inférieure et supérieure de la relation mathématique (1) précédente et de la relation équivalente susmentionnée. Comme visible sur les courbes C2, C3, C4, C5, pour certaines plages de déphasage angulaire, le couple mécanique maximum transférable, sans patinage dans l'engrenage magnétique 2, est supérieur à deux fois un couple mécanique maximum correspondant qui est transférable par un autre engrenage magnétique qui ne comporterait que la première roue 6A et la deuxième roue 6B. On observe une bonne symétrie entre les courbes C3 et C5 relativement au déphasage angulaire milieu $P_1/2$, ce qui s'explique aisément puisque ces deux situations sont magnétiquement équivalentes pour l'engrenage magnétique. On comprend ainsi pourquoi la relation mathématique (1) a des limites inférieure et supérieure correspondant à des décalages angulaires inférieur et supérieur situés à même distance du décalage angulaire milieu. Les meilleurs résultats sont obtenus pour la courbe C4 correspondant au décalage angulaire milieu $P_2/2$.

De préférence, et au vu de la figure 3A (et en particulier de la courbe C4 qui donne les meilleurs résultats en termes de couple mécanique maximum transférable pour certaines valeurs du déphasage angulaire), la valeur de l'angle $\Phi(N)$ est sélectionnée de sorte à être sensiblement égale à $\left(N - \frac{1}{2}\right)\cdot 360/N2$, ce qui correspond au décalage angulaire milieu $P_2/2$. En effet, le plus haut couple mécanique maximum transférable est obtenu pour la combinaison du décalage angulaire milieu $P_2/2$ avec le déphasage angulaire milieu $P_1/2$.

Dans le cas particulier illustré sur la figure 1 pour lequel N1 vaut dix-huit et où le nombre N2 de dents de la deuxième denture magnétique 10 est égal à quarante-deux, l'angle $\Phi(18)$ est de préférence égal à 150 degrés. Dans le cas particulier illustré sur la figure 2 pour lequel N vaut vingt et un et où le nombre N2 de dents de la deuxième denture magnétique 10 est égal à quarante-deux, l'angle $\Phi(21)$ est de préférence égal à 175,7 degrés. Comme illustré sur la quatrième courbe C4 de la figure 3A, pour un nombre N1 de dents de la première denture magnétique 8 et de la troisième denture magnétique 12 égal à six dents, les valeurs préférentielles (en termes de couple mécanique maximum transférable pour l'engrenage 2) pour le déphasage angulaire $\delta$ sont situées autour de la valeur optimale de 30 degrés (cette dernière valeur pour le déphasage angulaire $\delta$ optimal étant désignée $\Psi_{opt}$ 4).

Dans une variante avantageuse, et indépendamment de la relation mathématique (1) précédente (autrement dit lorsqu'on commence par sélectionner la valeur de l'angle $\Psi$ avant celle de l'angle $\Phi$), les première et troisième roues 6A, 6C sont positionnées angulairement, respectivement aux demi-axes respectifs 30 et 36, de manière que la différence angulaire $\Psi$ satisfait la relation mathématique (2) suivante :

$$\left(M - \frac{2}{3}\right)\cdot \frac{360°}{N1} \leq \Psi = \Psi(M) \leq \left(M - \frac{1}{3}\right)\cdot \frac{360°}{N1} \qquad (2)$$

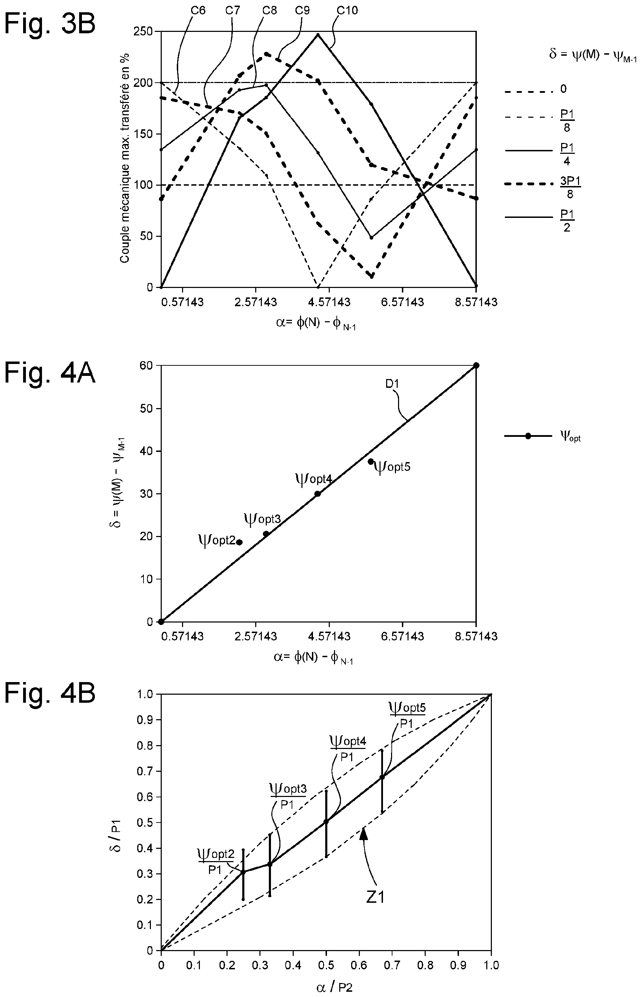

Différentes courbes C6, C7, C8, C9 et C10 sont tracées sur la figure 3B, qui représentent l'évolution du couple mécanique maximum transférable dans l'engrenage magnétique 2 (en %) pour différentes valeurs du déphasage angulaire $\delta = \Psi(M) - \Psi_{M-1}$, en fonction du décalage angulaire $\alpha = \Phi(N) - \Phi_{N-1}$. A noter que le déphasage angulaire $\delta$ est égal $\Psi(1)$. La relation mathématique (2) est équivalente à la relation $P_1 / 3 \leq \delta \leq 2\cdot P_1 / 3$ pour le déphasage angulaire.

Les courbes C6, C7, C8, C9 et C10 représentent l'évolution du couple mécanique maximum transférable dans l'engrenage magnétique 2 (en %) en fonction du décalage angulaire, lorsque le déphasage angulaire est respectivement égal à zéro, $P_1/8$, $P_1/4$, $3P_1/8$ et $P_1/2$. Comme visible sur les courbes C9, C10, pour certaines plages décalage angulaire, le couple mécanique maximum transférable sans glissement dans l'engrenage magnétique 2 est supérieur à deux fois un couple mécanique maximum correspondant qui est transférable par un autre engrenage magnétique qui ne comporterait que la première roue 6A et la deuxième roue 6B (avec les meilleurs résultats obtenus pour la courbe C10 correspondant à un déphasage angulaire milieu $P_1/2$).

De préférence, et au vu de la figure 3B (et en particulier de la courbe C10 qui donne les meilleurs résultats en termes de couple mécanique maximum transférable pour certaines valeurs du décalage angulaire), la valeur de la différence angulaire $\Psi(M)$ est sélectionnée de sorte à être sensiblement égale à $\left(M - \frac{1}{2}\right)\cdot 360/N1$, ce qui correspond à un déphasage angulaire optimal $\delta = P_1/2$. Ainsi, dans le cas particulier illustré sur la figure 2 pour lequel M vaut '1' et où le nombre N1 de dents de la première denture magnétique 8 et de la troisième denture magnétique 12 égal à

'6', l'angle $\Psi(1)$ est de préférence égal à 30 degrés. Ceci correspond à un déphasage angulaire optimal $\delta$ = 30°. Comme illustré sur la courbe C10 de la figure 3B, pour un nombre N2 de dents de la deuxième denture magnétique 10 égal à '42', les valeurs préférentielles (en termes de couple mécanique maximum transférable pour l'engrenage 2) pour le décalage angulaire $\alpha$ sont situées autour du décalage angulaire optimal $P_2/2$, égal environ à 4,286 degrés.

Sur la figure 4A est représentée graphiquement quatre points $\Psi$opt2, $\Psi$opt3, $\Psi$opt4, $\Psi$opt5 correspondant aux abscisses respectives des sommets des courbes C2, C3, C4, C5 de la figure 3A, soit aux déphasages angulaires optimaux, pour les différentes valeurs du décalage angulaire $\alpha$ correspondant à ces quatre courbes. On note qu'on obtient sur la figure 4A une fonction quasi linéaire pour les déphasages angulaires optimaux en fonction du décalage angulaire. La courbe théorique est une droite linéaire D1 qui indique que pour un décalage angulaire $X \cdot P2$ (X étant compris entre 0 et 1) sur la période P2 de la denture magnétique de la deuxième roue 6B, le déphasage angulaire optimal est $X \cdot P1$ sur la période P1 des dentures magnétiques des première et troisième roues 6A, 6C. On a alors, sur cette droite linéaire théorique D1, la relation $\delta$ = $(P1/P2) \cdot \alpha$.

La figure 4B donne une représentation graphique semblable à celle de la figure 4A mais avec des échelles différentes pour les coordonnées, à savoir un graphe du déphasage angulaire divisé par la période P1, soit $\delta / P1$, en fonction du décalage angulaire divisé par la période P2, soit $\alpha / 2$. En plus d'une courbe reliant les diverses valeurs optimales est représentée sur cette figure 4B une zone de couples de valeurs Z1 pour laquelle on obtient sensiblement un couple mécanique maximum transférable dans l'engrenage magnétique qui est supérieur à deux. Ce diagramme peut se lire de la manière suivante : une fois un déphasage angulaire ou un décalage angulaire sélectionné, la plage avantageuse pour l'autre de ces deux paramètres se trouve de part et d'autre d'une valeur optimale pour cet autre paramètre, sur une certaine plage de valeurs qui est variable en fonction de cet autre paramètre.

Dans la suite de la description, les éléments désignés par des mêmes références numériques sont analogues. Sans que cela ne soit limitatif dans le cadre de la présente invention, le mécanisme 1 est de préférence un mécanisme horloger.

En référence à la figure 2, on décrira ci-après un premier mode de réalisation du mécanisme 1 comprenant un engrenage magnétique 2 selon l'invention. Selon ce premier mode de réalisation du mécanisme 1, le mécanisme 1 comporte deux moteurs (ces deux moteurs n'étant pas représentés sur la figure 2 pour des raisons de clarté). Les première, deuxième et troisième roues 6A, 6B et 6C s'étendent dans un même plan général.

Le rotor d'un premier moteur, respectivement d'un second moteur, est relié cinématiquement à la première roue 6A, respectivement à la troisième roue 6C, pour entraîner en rotation cette roue. Chaque moteur est par exemple un moteur Lavet, muni d'un démultiplicateur. Les deux moteurs sont configurés pour entraîner simultanément les première et troisième roues 6A, 6C. Plus précisément, les deux moteurs sont configurés pour piloter simultanément les première et troisième roues 6A, 6C de manière que les première et deuxième positions angulaires restent en permanence déphasées de l'angle $\Psi(M)$ défini via la relation mathématique (2) donnée précédemment. Dans ce premier mode de réalisation du mécanisme 1, les première et troisième roues 6A, 6C sont des roues entraîneuses dans l'engrenage magnétique 2.

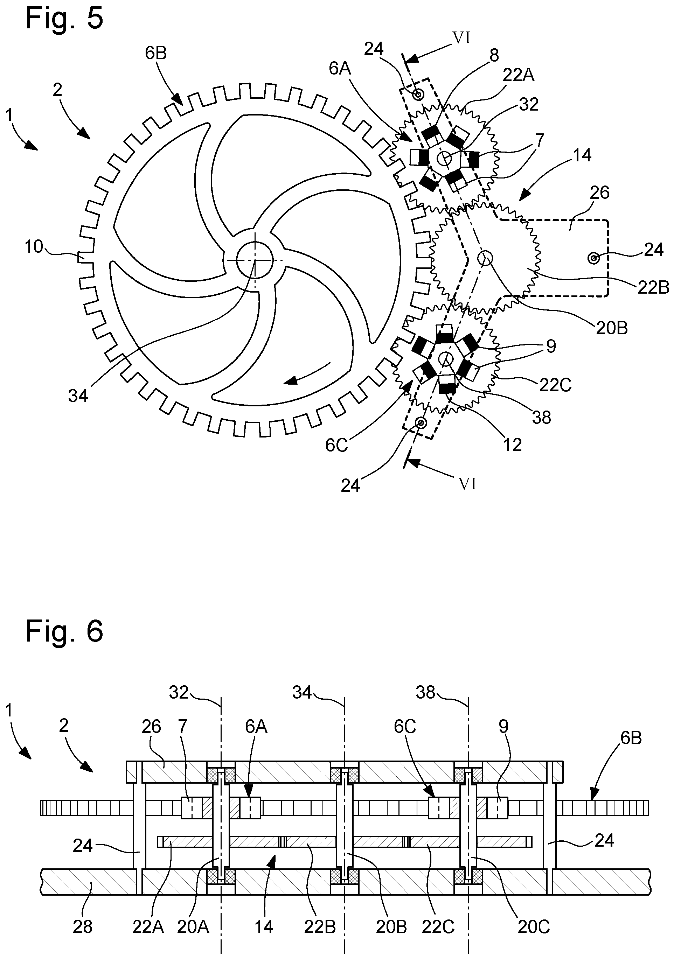

En référence aux figures 5 à 9, on décrira ci-après un deuxième mode de réalisation du mécanisme 1 comprenant un engrenage magnétique 2 selon l'invention. Selon ce deuxième mode de réalisation du mécanisme 1, le mécanisme comporte un seul moteur (non représenté sur les figures pour des raisons de clarté). Les première, deuxième et troisième roues 6B, 6C, 6A s'étendent dans un même plan général. Les première et troisième roues 6A, 6C sont couplées mécaniquement, typiquement via un train d'engrenages 14, et sont entraînées en rotation par le moteur. De préférence, et comme illustré sur les figures 5 à 9, les première et troisième roues 6A, 6C présentent un même diamètre et un même nombre de dents à leurs dentures magnétiques respectives. La distance qui sépare la première roue 6A de la troisième roue 6C est avantageusement supérieure à quatre fois, de préférence supérieure à huit fois le diamètre de chacune de ces deux roues.

Le rotor du moteur est relié cinématiquement à au moins une des première et troisième roues 6A, 6C ou à une roue complémentaire appartenant au train d'engrenages 14, pour entraîner simultanément en rotation ces première et troisième roues. Le moteur est de préférence un moteur Lavet ou un moteur horloger à rotation continue.

Selon une première variante du deuxième mode de réalisation du mécanisme 1, illustré aux figures 5 et 6, le rotor du moteur est relié à un train d'engrenages 14 couplant mécaniquement les première et troisième roues 6A, 6C, pour l'entraînement simultané en rotation des première et troisième roues via le train d'engrenages. Le train d'engrenages 14 est relié à l'arbre 20A, 20C de chacune des première et troisième roues 6A, 6C, pour le couplage mécanique de ces roues. Selon l'exemple représenté à la figure 6, le train d'engrenages 14 est constitué de trois roues 22A, 22B, 22C ; une roue centrale 22B étant par exemple relié au moteur et couplant mécaniquement les deux autres roues 22A, 22C. La roue centrale 22B est monté sur un arbre central 20B. Chacune des deux autres roues 22A, 22C est montée sur l'arbre respectif 20A, 20C d'une des première et troisième roues 6A, 6C, de manière coaxiale. Des chevilles 24 placées sur le côté du mécanisme 1 permettent de fixer un pont 26 à la platine 28. Dans cette première variante du deuxième mode de réalisation, les première et troisième roues 6A, 6C sont des roues entraîneuses dans l'engrenage magnétique 2. Dans une autre variante, la deuxième roue est entraîneuse et les première et troisième roues sont entraînées.

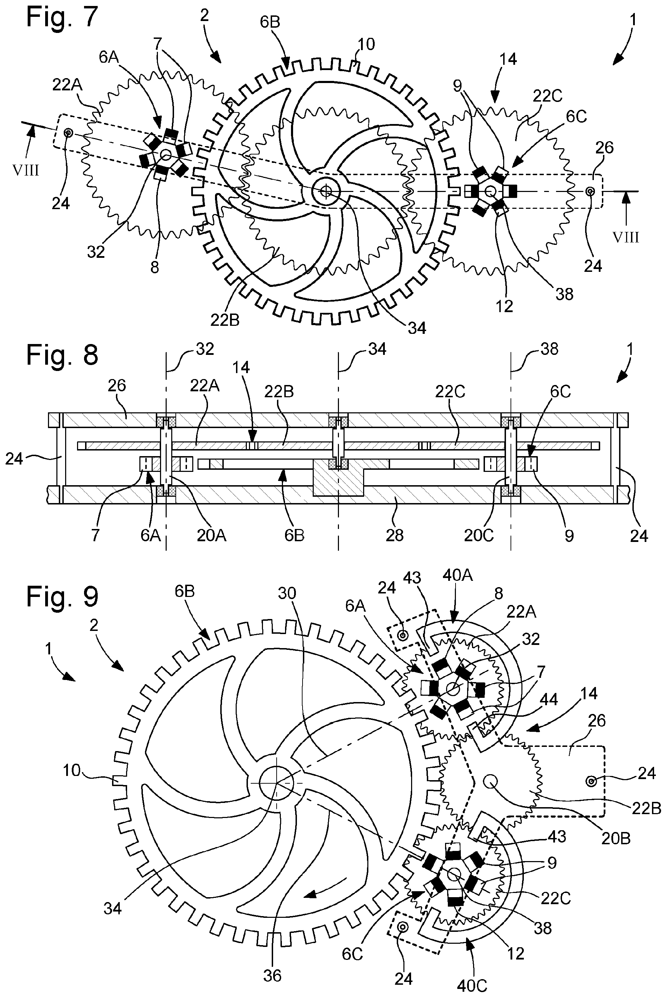

Une deuxième variante du deuxième mode de réalisation du mécanisme 1, illustré aux figures 7 et 8, se distingue essentiellement de la première variante en deux points principaux. Premièrement, les première et troisième roues 6A, 6C sont séparées autant que possible l'une de l'autre pour limiter leur interaction magnétique. Elles sont agencées sensiblement de part et d'autre de la deuxième roue 6B (grande roue), c'est-à-dire qu'elles sont sensiblement alignées sur un diamètre de cette deuxième roue. Ainsi, les forces magnétiques radiales agissant sur la deuxième roue 6B sont avantageusement sensiblement équilibrées. Deuxièmement, le mécanisme 1 comporte un palier de pivotement de la roue 22B du train d'engrenages 14 qui est aligné sur l'axe de rotation 34 de la deuxième roue 6B et qui est porté par une partie centrale de cette deuxième roue 6B, laquelle ne présente pas de propre palier du côté de la roue 22B.

Selon une variante améliorée du la première variante du deuxième mode de réalisation du mécanisme 1, illustrée à la figure 9, le mécanisme 1 comprend en outre, pour chacune des première et troisième roues 6A, 6C, un élément ferromagnétique 40A, 40C agencé relativement à cette roue 6A, 6C de sorte à compenser au mieux et d'annuler au moins une majeure partie du couple magnétique parasite que subit individuellement cette roue 6A, 6C. En effet, comme déjà exposé précédemment, chacune des première et troisième roues 6A, 6C entraîneuse est soumise à un couple magnétique parasite (appelé couple de positionnement).

L'élément ferromagnétique 40A, respectivement 40C, est agencé de préférence dans le plan général des première et troisième roue 6A et 6C, identique ici à celui de la deuxième roue 6B. Cet élément ferromagnétique 40A, 40C comprend deux parties d'extrémité 43 et 44 qui s'étendent en direction de la denture magnétique 8, respectivement 12, de la première roue 6A, respectivement de la troisième roue 6C. De manière générale, chacune des parties d'extrémité 43, 44 est positionnée à un angle, relativement au premier demi-axe de référence 30, respectivement au deuxième demi-axe de référence 36, dont la valeur est sensiblement égale à $(J-1/2) \cdot 360/N1$, soit $(J-1/2) \cdot P1$, avec J étant un nombre entier '1' et **N1,** différent pour chaque partie d'extrémité. On notera que, dans une variante plus complexe, d'autres parties saillantes, en sus des deux parties d'extrémité, peuvent être prévues en étant chacune positionnées à un angle différent parmi la pluralité d'angles définis par la valeur J entre '1' et **N1** dans la formule mathématique susmentionnée. Une partie intermédiaire 46 relie les deux parties d'extrémité 43, 44. Cette partie intermédiaire 46 a une forme de demi-cercle qui s'étend, dans le plan général de la première et troisième roues 6A, 6C, du côté opposé à la deuxième roue 6B. On notera que cette partie intermédiaire 46 est dimensionnée pour générer un faible couple magnétique sur la première roue 6A, respectivement sur la troisième roue 6C, bien inférieur au couple magnétique de positionnement individuel et au couple magnétique de compensation engendré globalement par l'élément ferromagnétique 40A, respectivement 40C, et principalement par les deux parties d'extrémité 43 et 44 qui sont agencées rentrantes en direction de la denture 8, respectivement 12, de la première roue 6A, respectivement de la troisième roue 6C, relativement au cercle défini par la partie intermédiaire 46.

L'élément ferromagnétique 40A, respectivement 40C, est agencé de manière à engendrer un couple magnétique de compensation, de même période que la variation d'intensité périodique du couple magnétique parasite, en fonction de la position angulaire de la première roue 6A, respectivement de la troisième roue 6C, relativement au premier demi-axe de référence 30, respectivement au deuxième demi-axe de référence 36. Avantageusement, comme représenté, le couple magnétique de compensation et le couple magnétique parasite (couple de positionnement) présentent un déphasage de sensiblement 180°. De préférence, l'élément ferromagnétique 40A, respectivement 40C, est configuré de manière que l'intensité maximale (l'amplitude) du couple magnétique de compensation est sensiblement égale à celle du couple magnétique de positionnement.

Selon un perfectionnement, il est prévu de configurer l'élément ferromagnétique 40A, respectivement 40C, de manière à engendrer globalement sur la première roue 6A, respectivement sur la troisième roue 6C, une force d'attraction magnétique de compensation qui est alignée sur le premier demi-axe de référence 30, respectivement sur le deuxième demi-axe de référence 36, avec un sens opposé à celui d'une force d'attraction magnétique radiale exercée globalement par la deuxième roue 6B sur la première roue 6A, respectivement sur la troisième roue 6C. On remarquera que la variante illustrée à la figure 9 présente déjà une petite force d'attraction magnétique de compensation résultant de la partie intermédiaire en demi-cercle, mais cette partie intermédiaire sert principalement à former un circuit magnétique de faible réluctance magnétique entre les deux parties d'extrémité 43 et 44 et sa force d'attraction magnétique sur la première roue 6A, respectivement sur la troisième roue 6C, est bien moindre que la force d'attraction magnétique radiale exercée par la deuxième roue 6B sur cette première roue 6A, respectivement sur cette troisième roue 6C, ces deux forces d'attraction n'étant pas du même ordre de grandeur. Différentes réalisations spécifiques peuvent être envisagées pour réaliser ce perfectionnement, notamment en sélectionnant de manière judicieuse les deux valeurs pour le paramètre J susmentionné ou/et en ajoutant une troisième partie rentrante en direction de la roue considérée et/ou en configurant différemment la partie intermédiaire.

Il est à noter que, bien qu'une telle configuration incluant des éléments ferromagnétiques 40A, 40C ait été décrite en référence au premier exemple du deuxième mode de réalisation du mécanisme 1, cette configuration s'applique de la même manière au premier mode de réalisation ainsi qu'à la deuxième variante du deuxième mode de réalisation du mécanisme 1, sans sortir du cadre de la présente invention.

A titre d'exemples illustratifs et non limitatifs, des résultats chiffrés pour le couple mécanique maximum transférable dans l'engrenage 2 ont été obtenus par les inventeurs. Ces résultats chiffrés ont été obtenus pour un nombre N1 de dents égal à six et pour un nombre N2 de dents égal à quarante-deux. Pour un autre engrenage magnétique qui ne comporterait que la première roue 6A et la deuxième roue 6B, le couple mécanique maximum transférable dans l'engrenage est égal à 93 μNm. Pour l'engrenage magnétique 2 selon l'invention, pour une valeur de décalage angulaire α égale à zéro degrés et pour une valeur de déphasage angulaire δ égale à zéro degré, le couple mécanique maximum transférable dans l'engrenage 2 est égal à 186 μNm. Cette valeur correspond exactement au double de la valeur obtenue pour l'engrenage magnétique qui ne comporte que la première roue 6A et la deuxième roue 6B, ce qui était attendu. Pour une valeur de décalage angulaire α optimale, égale à 4,286 degrés, et pour une valeur de déphasage angulaire δ optimale, égale à 30 degrés, le couple mécanique maximum transférable dans l'engrenage 2 est environ égal à 227 μNm (ce qui correspond à une augmentation de plus de 20% par rapport au cas où α = δ = 0°).

**Revendications**

1. Mécanisme horloger (1) comprenant un engrenage magnétique (2) comportant une première roue (6A) et une deuxième roue (6B), la première (6A) roue étant munie de premiers pôles magnétiques permanents (7) qui sont agencés de manière à former les dents aimantées d'une première denture magnétique (8) desquelles sortent respectivement des premiers flux magnétiques ayant des polarités alternées, la deuxième roue (6B) étant munie de dents en matériau ferromagnétique doux définissant une deuxième denture magnétique (10), la première roue (6A) et la deuxième roue (6B) étant agencées de manière que la première denture magnétique (8) présente un premier couplage magnétique avec la deuxième denture magnétique (10) généré par lesdits premiers flux magnétiques qui polarisent momentanément, en attraction magnétique, des dents de la deuxième denture magnétique (10), lesquelles sont momentanément situées dans une première zone de couplage magnétique avec la première denture magnétique (8) et alors traversées respectivement par des premiers flux magnétiques parmi lesdits premiers flux magnétiques, de sorte que les première et deuxième roues (6A, 6B) engrènent magnétiquement l'une avec l'autre, l'engrenage magnétique (2) définissant un premier demi-axe de référence (30) partant de l'axe de rotation (34) de la deuxième roue (6B) et interceptant l'axe de rotation (32) de la première roue (6A) ; **caractérisé en ce que** l'engrenage magnétique (2) comprend en outre une troisième roue (6C) munie de deuxièmes pôles magnétiques permanents (9) qui sont agencés de manière à former les dents aimantées d'une troisième denture magnétique (12) desquelles sortent respectivement des deuxièmes flux magnétiques ayant des polarités alternées, la troisième roue (6C) et la deuxième roue (6B) étant agencées de manière que la troisième denture magnétique (12) présente un deuxième couplage magnétique avec la deuxième denture magnétique (10) généré par lesdits deuxièmes flux magnétiques qui polarisent momentanément, en attraction magnétique, des dents de la deuxième denture magnétique (10), lesquelles sont momentanément situées dans une deuxième zone de couplage magnétique avec la troisième denture magnétique (12) et alors traversées respectivement par des deuxièmes flux magnétiques parmi lesdits deuxièmes flux magnétiques, de sorte que les deuxième et troisième roues (6B, 6C) engrènent magnétiquement l'une avec l'autre, l'engrenage magnétique (2) définissant un deuxième demi-axe de référence (36) partant de l'axe de rotation (34) de la deuxième roue (6B) et interceptant l'axe de rotation (38) de la troisième roue (6C), le premier demi-axe de référence (30) et le deuxième demi-axe de référence (36) présentant entre eux un angle Φ donné ; **en ce que** les premiers pôles magnétiques permanents (7A) de la première roue (6A) présente une première phase relativement au premier demi-axe de référence (30), et les deuxièmes pôles magnétiques permanents (9A) de la troisième roue (6C) présentent une deuxième phase relativement au deuxième demi-axe de référence (36), l'engrenage magnétique (2) étant agencé de manière que, à tout instant, un déphasage entre les première et troisième roues, défini comme la différence entre lesdites première et deuxième phases, est constant ; et **en ce que** ledit angle Φ et ledit déphasage sont sélectionnés de sorte à déterminer sensiblement la valeur d'un couple mécanique maximum transférable dans l'engrenage magnétique sans glissement entre la deuxième roue et les première et troisième roues.

2. Mécanisme horloger selon la revendication 1, **caractérisé en ce que** la première denture magnétique (8) et la troisième denture magnétique (12) comportent chacune un même nombre **N1** de dents (7, 9) ; et **en ce que** les première et troisième roues (6A, 6C) sont positionnées angulairement, relativement à l'axe de rotation de la deuxième roue, de manière que ledit angle Φ satisfait la relation mathématique :

$$\left(N - \frac{2}{3}\right) \cdot \frac{360°}{N2} \leq \Phi = \Phi(N) \leq \left(N - \frac{1}{3}\right) \cdot \frac{360°}{N2}$$

où N2 est le nombre de dents de la deuxième denture magnétique (10) et N est un nombre entier positif inférieur à N2.

3. Mécanisme horloger selon la revendication 2, dans lequel la valeur de l'angle Φ(N) est sélectionnée de sorte à être sensiblement égale à

$$\left(N - \frac{1}{2}\right) \cdot \frac{360°}{N2}$$

4. Mécanisme horloger selon la revendication 1, **caractérisé en ce que** la première denture magnétique (8) et la troisième denture magnétique (12) comportent chacune un même nombre **N1** de dents (7, 9), deux dents déterminées appartenant respectivement à ces première et troisième dentures magnétiques présentant, relativement aux premier et deuxième demi-axes respectifs et à tout instant, une différence angulaire Ψ constante donnée ; et **en ce que** les première et troisième roues (6A, 6C) sont positionnées angulairement, relativement aux premier et deuxième demi-axes respectifs, de manière que la différence angulaire Ψ satisfait la relation mathématique :

$$\left(M - \frac{2}{3}\right) \cdot \frac{360°}{N1} \leq \Psi = \Psi(M) \leq \left(M - \frac{1}{3}\right) \cdot \frac{360°}{N1}$$

où M est un nombre entier positif inférieur à N1.

5. Mécanisme horloger selon la revendication 4, dans lequel la valeur de la différence angulaire Ψ(M) est sélectionnée de sorte à être sensiblement égale à

$$\left(M - \frac{1}{2}\right) \cdot \frac{360°}{N1}$$

6. Mécanisme horloger selon l'une quelconque des revendications précédentes, **caractérisé en ce que** les dents aimantées (7, 9) de la première denture (8), respectivement de la troisième denture (12), sont agencées de manière que les premiers flux magnétiques, respectivement les deuxièmes flux magnétiques, sortent de ces dents aimantées (7, 9) avec une direction principale radiale relativement à l'axe de rotation (32, 38) de la première roue (6A), respectivement de la troisième roue (6C).

7. Mécanisme horloger selon l'une quelconque des revendications précédentes, **caractérisé en ce que** les première et troisième roues (6A, 6C) sont entraîneuses et la deuxième roue (6B) est entraînée.

8. Mécanisme horloger selon la revendication 7, **caractérisé en ce qu'**il comporte en outre deux moteurs, les rotors respectifs des deux moteurs étant reliés cinématiquement chacun à une roue différente parmi les première et troisième roues (6A, 6C) pour entraîner en rotation ces première et troisième roues, lesquelles sont ainsi des roues entraîneuses dans l'engrenage magnétique (2) ; et **en ce que** les deux moteurs sont configurés pour pouvoir entraîner au moins en partie simultanément les première et troisième roues (6A, 6C).

9. Mécanisme horloger selon la revendication 7, **caractérisé en ce que** les première et troisième roues (6A, 6C) sont couplées mécaniquement ; et **en ce que** le mécanisme comporte en outre un moteur dont le rotor est relié cinématiquement aux première et troisième roues (6A, 6C) pour pouvoir entraîner en rotation ces première et troisième roues.

10. Mécanisme horloger selon la revendication 9, **caractérisé en ce qu'**un train d'engrenages (14) couple mécaniquement les première et troisième roues (6A, 6C), le rotor entraînant en rotation ce train d'engrenages et les première et troisième roues (6A, 6C).

11. Mécanisme horloger selon l'une quelconque des revendications précédentes, **caractérisé en ce que** les première et troisième roues (6A, 6C) sont disposées sensiblement de part et d'autre de la deuxième roue (6B), la deuxième roue (6B) étant ainsi agencée sensiblement entre les première et troisième roues (6A, 6C).

12. Mécanisme horloger selon la revendication 10, **caractérisé en ce que** les première et troisième roues (6A, 6C) sont disposées sensiblement de part et d'autre de la deuxième roue (6B), la deuxième roue étant ainsi agencée sensiblement entre les première et troisième roues ; et **en ce que** le train d'engrenages (14) est constitué de trois roues additionnelles (22A, 22B, 22C), des première et deuxième roues additionnelles (22A, 22C) parmi les trois étant respectivement reliés aux arbres (20A, 20C) des première et troisième roues, la troisième roue additionnelle (22B) couplant mécaniquement les première et deuxième roues additionnelles ; et **en ce que** le mécanisme (1) comporte un palier de guidage de la troisième roue additionnelle qui est aligné sur l'axe de rotation (34) de la deuxième roue (6B) et porté par cette deuxième roue.

13. Mécanisme horloger selon l'une quelconque des revendications précédentes, **caractérisé en ce que** la première roue (6A), respectivement la troisième roue (6C), présente une partie centrale (32, 38) en matériau ferromagnétique, en périphérie de laquelle sont agencés par paires ses dits premiers pôles magnétiques permanents (7), respectivement ses dits deuxièmes pôles magnétiques permanents (9), avec respectivement autant de pôles magnétiques complémentaires, formant ainsi des aimants bipolaires présentant une aimantation radiale et définissant les dents aimantées de la première denture magnétique (8), respectivement de la troisième denture magnétique (12).

14. Mécanisme horloger selon l'une quelconque des revendications précédentes, **caractérisé en ce que** la deuxième roue (6B) comprend une jante formant une base circulaire continue pour la deuxième denture magnétique (10) qui s'élève depuis cette jante, laquelle est constituée d'un matériau ferromagnétique doux de sorte à former une fermeture pour des chemins magnétiques desdits premiers flux magnétiques et desdits deuxièmes flux magnétiques passant au travers de la deuxième denture.

15. Mécanisme horloger selon la revendication 7, **caractérisé en ce qu'**il comprend en outre, pour chacune des première et troisième roues (6A, 6C), un élément ferromagnétique ou un ensemble d'éléments ferromagnétiques agencé relativement à cette roue (6A ou 6C) de sorte à compenser au moins une majeure partie d'un couple magnétique de positionnement individuel que subit chacune des première et troisième roues et résultant du couplage magnétique de cette roue avec la deuxième denture magnétique (10) de la deuxième roue (6B), le couple magnétique de positionnement individuel subi par chacune des première et troisième roues ayant une variation d'intensité périodique en fonction de la position angulaire de cette roue relativement au demi-axe de référence (30, 36) partant de l'axe de rotation (34) de la deuxième roue (6B) et interceptant l'axe de rotation (32, 38) de cette roue.

16. Mécanisme horloger selon la revendication **15, caractérisé en ce que** ledit élément ferromagnétique ou l'ensemble d'éléments ferromagnétiques est agencé de manière à engendrer un couple magnétique de compensation qui présente également une variation d'intensité périodique en fonction de la position angulaire de la roue concernée (6A, 6C) relativement au demi-axe de référence (30, 36) interceptant l'axe de rotation (32, 38) de cette roue, le couple magnétique de compensation et le couple magnétique de positionnement individuel présentant un déphasage de sensiblement 180°.

17. Pièce d'horlogerie, notamment montre-bracelet, **caractérisée en ce qu'**elle comprend un mécanisme horloger (1) selon l'une quelconque des revendications précédentes.

**Patentansprüche**

1. Uhrwerkmechanismus (1), umfassend ein Magnetgetriebe (2) mit einem ersten Zahnrad (6A) und einem zweiten Zahnrad (6B), wobei das erste Zahnrad (6A) mit ersten permanenten Magnetpolen (7) ausgestattet ist, die so angeordnet sind, dass sie die magnetisierten Zähne eines ersten magnetischen Zahnkranzes (8) bilden, aus denen abwechselnd Magnetflüsse mit wechselnder Polarität austreten. Das zweite Zahnrad (6B) besitzt Zähne aus weich ferromagnetischem Material, die einen zweiten magnetischen Zahnkranz (10) bilden. Die Zahnräder (6A, 6B) sind derart zueinander positioniert, dass der erste Zahnkranz (8) über die genannten Magnetflüsse eine erste magnetische Kopplung mit dem zweiten Zahnkranz (10) bewirkt, indem diese Flüsse die Zähne des zweiten Zahnkranzes (10), die sich temporär in einer ersten magnetischen Kopplungszone befinden, kurzzeitig magnetisch polarisieren - wodurch ein magnetisches Eingreifen zwischen den beiden Zahnrädern erfolgt. Das Magnetgetriebe (2) definiert eine erste halbe Referenzachse (30), die von der Rotationsachse (34) des zweiten Zahnrads (6B) ausgeht und die Rotationsachse (32) des ersten Zahnrads (6A) schneidet. Ferner umfasst das Magnetgetriebe (2) ein drittes Zahnrad (6C) mit zweiten permanenten Magnetpolen (9), die so angeordnet sind, dass sie die Zähne eines dritten magnetischen Zahnkranzes (12) bilden, aus denen ebenfalls Magnetflüsse mit alternierender Polarität austreten. Das dritte Zahnrad (6C) ist so angeordnet, dass sein Zahnkranz (12) eine zweite magnetische Kopplung mit dem zweiten Zahnkranz (10) bildet - über die genannten zweiten Magnetflüsse, welche ebenfalls temporär Zähne des zweiten Zahnkranzes (10) in einer zweiten magnetischen Kopplungszone magnetisieren - sodass auch die Zahnräder (6B, 6C) magnetisch eingreifen. Das Magnetgetriebe (2) definiert eine zweite halbe Referenzachse (36), welche von der Rotationsachse (34) des zweiten Zahnrads (6B) ausgeht und die Rotationsachse (38) des dritten Zahnrads (6C) schneidet. Zwischen der ersten und der zweiten halben Referenzachse (30, 36) besteht ein definierter Winkel Φ. Die permanenten Magnetpole (7A) des ersten Zahnrads (6A) weisen eine erste Phase relativ zur ersten halben Referenzachse (30) auf, die permanenten Magnetpole (9A) des dritten Zahnrads (6C) eine zweite Phase relativ zur zweiten halben Referenzachse (36). Das Magnetgetriebe (2) ist so ausgelegt, dass der Phasenunterschied - definiert als Differenz zwischen der ersten und der zweiten Phase - zu jedem Zeitpunkt konstant bleibt. Der Winkel Φ sowie der Phasenunterschied sind so gewählt, dass sie den maximal übertragbaren Drehmomentwert bestimmen, bei dem das Magnetgetriebe (insbesondere die zweite gegenüber der ersten und dritten Zahnradstufe) ohne Schlupf arbeitet.

2. Uhrwerkmechanismus gemäß Anspruch 1, **dadurch gekennzeichnet, dass** der erste magnetische Zahnkranz (8) und der dritte magnetische Zahnkranz (12) jeweils dieselbe Anzahl $N_1$ von Zähnen (7, 9) aufweisen; ferner sind das erste und das dritte Zahnrad (6A, 6C) bezüglich der Rotationsachse des zweiten Zahnrads in einer Winkelstellung angeordnet, sodass der Winkel Θ (hier bezeichnet als "0") die mathematische Beziehung erfüllt:

$$\left(N - \frac{2}{3}\right) \cdot \frac{360°}{N2} \leq \Phi = \Phi(N) \leq \left(N - \frac{1}{3}\right) \cdot \frac{360°}{N2}$$

wobei $N_2$ die Anzahl der Zähne des zweiten magnetischen Zahnkranzes (10) ist und N eine ganzzahlige positive Zahl kleiner als $N_2$ darstellt.

3. Uhrwerksmechanismus gemäß Anspruch 2, wobei der Wert des Winkels Φ (N) so gewählt ist, dass er im Wesentlichen gleich ist wie

$$\left(N - \frac{1}{2}\right) \cdot \frac{360°}{N2}$$

4. Uhrwerkmechanismus gemäß Anspruch 1, **dadurch gekennzeichnet, dass** der erste magnetische Zahnkranz (8) und der dritte magnetische Zahnkranz (12) jeweils dieselbe Anzahl $N_1$ von Zähnen (7, 9) aufweisen, wobei zwei definierte Zähne, die jeweils zu diesen ersten und dritten Zahnkränzen gehören, relativ zu den jeweiligen ersten und zweiten halben Referenzachsen zu jedem Zeitpunkt einen konstanten Winkelunterschied ψ aufweisen; und dass das erste und das dritte Zahnrad (6A, 6C) relativ zu den jeweiligen halben Referenzachsen so ausgerichtet sind, dass der Winkel ψ die folgende mathematische Beziehung erfüllt:

$$\left(M - \frac{2}{3}\right) \cdot \frac{360°}{N1} \leq \Psi = \Psi(M) \leq \left(M - \frac{1}{3}\right) \cdot \frac{360°}{N1}$$

wobei M eine positive ganze Zahl kleiner als $N_1$ ist.

5. Uhrwerkmechanismus gemäß Anspruch 4, wobei der Wert der Winkeldifferenz Ψ(M) so gewählt ist, dass er im Wesentlichen gleich ist wie

$$\left(M - \frac{1}{2}\right) \cdot \frac{360°}{N1}$$

6. Uhrwerkmechanismus gemäß einem der vorhergehenden Ansprüche, **dadurch gekennzeichnet, dass** die magnetisierten Zähne (7, 9) des ersten Zahnkranzes (8) bzw. des dritten Zahnkranzes (12) so angeordnet sind, dass die ersten Magnetflüsse
bzw. die zweiten Magnetflüsse aus diesen magnetisierten Zähnen (7, 9) mit einer im Wesentlichen radialen Hauptrichtung relativ zur Rotationsachse (32, 38) des ersten Rades (6A) bzw. des dritten Rades (6C) austreten.

7. Uhrwerkmechanismus gemäß einem der vorhergehenden Ansprüche, **dadurch gekennzeichnet, dass** das erste und das dritte Rad (6A, 6C) antreibend wirken und das zweite Rad (6B) angetrieben wird.

8. Uhrwerkmechanismus gemäß Anspruch 7, **dadurch gekennzeichnet, dass** er zusätzlich zwei Motoren umfasst, deren jeweilige Rotoren kinematisch jeweils mit einem der ersten und dritten Räder (6A, 6C) verbunden sind, um diese rotatorisch anzutreiben, sodass die Räder (6A, 6C) als antreibende Räder im Magnetgetriebe (2) fungieren; und dass die beiden Motoren so ausgelegt sind, dass sie zumindest teilweise gleichzeitig die ersten und dritten Räder (6A, 6C) antreiben können.

9. Uhrwerkmechanismus gemäß Anspruch 7, **dadurch gekennzeichnet, dass** das erste und das dritte Rad (6A, 6C) mechanisch gekoppelt sind; und dass der Mechanismus zusätzlich einen Motor umfasst, dessen Rotor kinematisch mit den Rädern (6A, 6C) verbunden ist, um diese rotatorisch anzutreiben.

10. Uhrwerkmechanismus gemäß Anspruch 9, **dadurch gekennzeichnet, dass** ein Getriebezug (14) das erste und das dritte Rad (6A, 6C) mechanisch koppelt, wobei der Rotor den Getriebezug sowie die Räder (6A, 6C) in Rotation versetzt.

11. Uhrwerkmechanismus gemäß einem der vorhergehenden Ansprüche, **dadurch gekennzeichnet, dass** das erste und das dritte Rad (6A, 6C) im Wesentlichen beidseitig des zweiten Rads (6B) angeordnet sind, wobei das zweite Rad (6B) folglich im Wesentlichen zwischen dem ersten und dem dritten Rad (6A, 6C) angeordnet ist.

12. Uhrwerkmechanismus gemäß Anspruch 10, **dadurch gekennzeichnet, dass** das erste und das dritte Rad (6A, 6C) im Wesentlichen beidseitig des zweiten Rads (6B) angeordnet sind, wobei dieses folglich zwischen den Rädern (6A, 6C) liegt; und dass der Getriebezug (14) aus drei zusätzlichen Rädern (22A, 22B, 22C) besteht, wobei das erste und das zweite zusätzliche Rad (22A, 22C) jeweils mit den Wellen (20A, 20C) der Räder (6A, 6C) verbunden sind, und das dritte zusätzliche Rad (22B) die beiden anderen mechanisch koppelt; ferner umfasst der Mechanismus (1) ein Führungslager für das dritte zusätzliche Rad, das auf die Rotationsachse (34) des zweiten Rads (6B) ausgerichtet ist und von diesem getragen wird.

13. Uhrwerkmechanismus gemäß einem der vorhergehenden Ansprüche, **dadurch gekennzeichnet, dass** das erste Rad (6A) bzw. das dritte Rad (6C) jeweils einen zentralen Abschnitt (32 bzw. 38) aus ferromagnetischem Material aufweist, an dessen Umfang die besagten ersten bzw. zweiten permanentmagnetischen Pole (7 bzw. 9) paarweise mit jeweils komplementären Polen angeordnet sind, wodurch bipolare Magnete mit radialer Magnetisierung gebildet werden, welche die magnetisierten Zähne des ersten (8) bzw. Dritten (12) magnetischen Zahnkranzes definieren.

14. Uhrwerkmechanismus gemäß einem der vorhergehenden Ansprüche, **dadurch gekennzeichnet, dass** das zweite Rad (6B) eine Felge aufweist, die eine durchgehende kreisförmige Basis für den zweiten magnetischen Zahnkranz (10) bildet, welcher von dieser Felge aufragt, wobei die Felge aus weich ferromagnetischem Material besteht, um einen magnetischen Rückschluss für die magnetischen Flüsse der genannten ersten und zweiten Magnetflüsse zu bilden, welche durch den zweiten magnetischen Zahnkranz hindurchgeführt werden.

15. Uhrwerkmechanismus gemäß Anspruch 7, **dadurch gekennzeichnet, dass** er für jedes der ersten und dritten Räder (6A, 6C) jeweils ein ferromagnetisches Element oder ein Set ferromagnetischer Elemente umfasst, das relativ zu diesem Rad (6A oder 6C) so angeordnet ist, dass zumindest ein Großteil eines individuellen magnetischen Positionierungsdrehmoments kompensiert wird, welches jedes dieser Räder infolge der magnetischen Kopplung mit dem zweiten magnetischen Zahnkranz (10) des zweiten Rades (6B) erfährt; wobei dieses individuelle Positionierungsdrehmoment eine periodisch variierende Intensität in Abhängigkeit von der Winkelposition des Rades relativ zur halben Referenzachse (30, 36) zeigt, die von der Rotationsachse (34) des zweiten Rades (6B) ausgeht und die Rotationsachse (32, 38) des jeweiligen Rades schneidet.

16. Uhrwerkmechanismus gemäß Anspruch 15, **dadurch gekennzeichnet, dass** das genannte ferromagnetische Element oder der Satz ferromagnetischer Elemente so angeordnet ist, dass es ein kompensierendes magnetisches Drehmoment erzeugt, welches ebenfalls eine periodische Intensitätsvariation in Abhängigkeit von der Winkelposition des betreffenden Rades (6A, 6C) relativ zur halben Referenzachse (30, 36) aufweist, die die Rotationsachse (32, 38) dieses Rades schneidet, wobei das kompensierende Drehmoment gegenüber dem individuellen magnetischen Positionierungsdrehmoment eine Phasenverschiebung von annähernd 180° aufweist.

17. Uhrwerk, insbesondere Armbanduhr, **dadurch gekennzeichnet, dass** es einen Uhrwerkmechanismus (1) gemäß einem der vorhergehenden Ansprüche umfasst.

**Claims**

1. Timepiece mechanism (1), comprising a magnetic gear (2) including a first wheel (6A) and a second wheel (6B), the first (6A) wheel being provided with first permanent magnetic poles (7) which are arranged so as to form the magnetised teeth of a first magnetic toothing (8) from which first magnetic fluxes having alternating polarities respectively emerge, the second wheel (6B) being provided with teeth made of a soft ferromagnetic material defining a second magnetic toothing (10), the first wheel (6A) and the second wheel (6B) being arranged such that the first magnetic toothing (8) has a first magnetic coupling with the second magnetic toothing (10) generated by said first magnetic fluxes which momentarily polarise, in magnetic attraction, teeth of the second magnetic toothing (10), which are momentarily located in a first magnetic coupling zone with the first magnetic toothing (8) and thus through which first magnetic fluxes from among said first magnetic fluxes respectively flow, such that the first and second wheels (6A, 6B) magnetically mesh with one another, the magnetic gear (2) defining a first reference half-axis (30) starting from the rotational axis (34) of the second wheel (6B) and intercepting the rotational axis (32) of the first wheel (6A); **characterised in that** the magnetic gear (2) further comprises a third wheel (6C) provided with second permanent magnetic poles (9) which are arranged so as to form the magnetised teeth of a third magnetic toothing (12) from which second magnetic fluxes with alternating polarities respectively emerge, the third wheel (6C) and the second wheel (6B) being arranged such that the third magnetic toothing (12) has a second magnetic coupling with the second magnetic toothing (10) generated by said second magnetic fluxes which momentarily polarise, in magnetic attraction, teeth of the second magnetic toothing (10), which are momentarily located in a second magnetic coupling zone with the third magnetic toothing (12) and thus through which second magnetic fluxes from among said second magnetic fluxes respectively flow, such that the second and third wheels (6B, 6C) magnetically mesh with one another, the magnetic gear (2) defining a second reference half-axis (36) starting from the rotational axis (34) of the second wheel (6B) and intercepting the rotational axis (38) of the third wheel (6C), the first reference half-axis (30) and the second reference half-axis (36) having a given angle Φ therebetween; **in that** the first permanent magnetic poles (7A) of the first wheel (6A) have a first phase relative to the first reference half-axis (30), and the second permanent magnetic poles (9A) of the third wheel (6C) have a second phase relative to the second reference half-axis (36), the magnetic gear (2) being arranged such that a phase shift between the first and third wheels, defined as the difference between said first and second phases, is constant at all times; and **in that** said angle Φ and said phase shift are selected so as to substantially determine the value of a maximum mechanical torque that can be transferred in the magnetic gear without slippage occurring between the second wheel and the first and third wheels.

2. Timepiece mechanism according to claim 1, **characterised in that** the first magnetic toothing (8) and the third magnetic toothing (12) each include the same number N1 of teeth (7, 9); and **in that** the first and third wheels (6A, 6C) are angularly positioned, relative to the rotational axis of the second wheel, in such a way that said angle Φ satisfies the mathematical relationship:

$$\left(N - \frac{2}{3}\right) \cdot \frac{360°}{N2} \leq \Phi = \Phi(N) \leq \left(N - \frac{1}{3}\right) \cdot \frac{360°}{N2}$$

where N2 is the number of teeth in the second magnetic toothing (10) and N is a positive integer less than N2.

3. Timepiece mechanism according to claim 2, wherein the value of the angle Φ(N) is selected to be substantially equal to

$$\left(N - \frac{1}{2}\right) \cdot \frac{360°}{N2}$$

4. Timepiece mechanism according to claim 1, **characterised in that** the first magnetic toothing (8) and the third magnetic toothing (12) each include the same number N1 of teeth (7, 9), two specific teeth respectively belonging to these first and third magnetic toothings having, relative to the respective first and second half-axes and at all times, a given constant angular difference Ψ; and **in that** the first and third wheels (6A, 6C) are angularly positioned, relative to the respective first and second half-axes, such that the angular difference Ψ satisfies the mathematical relationship:

$$\left(M - \frac{2}{3}\right) \cdot \frac{360°}{N1} \leq \Psi = \Psi(M) \leq \left(M - \frac{1}{3}\right) \cdot \frac{360°}{N1}$$

where M is a positive integer less than N1.

5. Timepiece mechanism according to claim 4, wherein the value of the angular difference Ψ(M) is selected to be substantially equal to

$$\left(M - \frac{1}{2}\right) \cdot \frac{360°}{N1}$$

6. Timepiece mechanism according to any one of the preceding claims, **characterised in that** the magnetised teeth (7, 9) of the first toothing (8), respectively of the third toothing (12), are arranged such that the first magnetic fluxes, respectively the second magnetic fluxes, emerge from these magnetised teeth (7, 9) in a main direction which is radial relative to the rotational axis (32, 38) of the first wheel (6A), respectively of the third wheel (6C).

7. Timepiece mechanism according to any one of the preceding claims, **characterised in that** the first and third wheels (6A, 6C) are drive wheels and the second wheel (6B) is driven.

8. Timepiece mechanism according to claim 7, **characterised in that** it further includes two motors, the respective rotors of the two motors each being kinematically connected to a different wheel from among the first and third wheels (6A, 6C), in order to drive these first and third wheels such that they rotate, which are thus drive wheels in the magnetic gear (2); and **in that** the two motors are configured to be able to drive the first and third wheels (6A, 6C) at least in part simultaneously.

9. Timepiece mechanism according to claim 7, **characterised in that** the first and third wheels (6A, 6C) are mechanically coupled; and **in that** the mechanism further includes one motor, the rotor whereof is kinematically connected to the first and third wheels (6A, 6C), in order to be able to drive these first and third wheels such that they rotate.

10. Timepiece mechanism according to claim 9, **characterised in that** a gear train (14) mechanically couples the first and third wheels (6A, 6C), the rotor driving this gear train and the first and third wheels (6A, 6C) such that they rotate.

11. Timepiece mechanism according to any one of the preceding claims, **characterised in that** the first and third wheels (6A, 6C) are disposed substantially on either side of the second wheel (6B), the second wheel (6B) thus being arranged substantially between the first and third wheels (6A, 6C).

12. Timepiece mechanism according to claim 10, **characterised in that** the first and third wheels (6A, 6C) are disposed substantially on either side of the second wheel (6B), the second wheel thus being arranged substantially between the first and third wheels; and **in that** the gear train (14) consists of three additional wheels (22A, 22B, 22C), first and second additional wheels (22A, 22C) from the three respectively being connected to the shafts (20A, 20C) of the first and third wheels, the third additional wheel (22B) mechanically coupling the first and second additional wheels; and **in that** the mechanism (1) includes a guide bearing for the third additional wheel which is aligned with the rotational axis (34) of the second wheel (6B) and carried by this second wheel.

13. Timepiece mechanism according to any one of the preceding claims, **characterised in that** the first wheel (6A), respectively the third wheel (6C), has a central part (32, 38) made of a ferromagnetic material, on the periphery whereof its said first permanent magnetic poles (7), respectively its said second permanent magnetic poles (9), are arranged in pairs respectively with as many complementary magnetic poles, thus forming bipolar magnets having radial magnetisation and defining the magnetised teeth of the first magnetic toothing (8), respectively of the third magnetic toothing (12).

14. Timepiece mechanism according to any one of the preceding claims, **characterised in that** the second wheel (6B) comprises a rim, forming a continuous circular base for the second magnetic toothing (10) which emerges from this rim, and which is made of a soft ferromagnetic material so as to form a closure for magnetic paths of said first magnetic fluxes and of said second magnetic fluxes passing through the second toothing.

15. Timepiece mechanism according to claim 7, **characterised in that** it further comprises, for each of the first and third wheels (6A, 6C), a soft ferromagnetic element or a set of soft ferromagnetic elements arranged relative to this wheel (6A or 6C) so as to compensate for, at least for the most part, an individual magnetic positioning torque to which each of the first and third wheels are subjected and resulting from the magnetic coupling of this wheel with the second magnetic toothing (10) of the second wheel (6B), the individual magnetic positioning torque to which each of the first and third wheels are subjected having a periodic variation in intensity as a function of the angular position of this wheel relative to the reference half-axis (30, 36) starting from the rotational axis (34) of the second wheel (6B) and intercepting the rotational axis (32, 38) of this wheel.

16. Timepiece mechanism according to claim 15, **characterised in that** said ferromagnetic element or the set of ferromagnetic elements is arranged so as to generate a magnetic compensating torque which also has a periodic variation in intensity as a function of the angular position of the wheel (6A, 6C) concerned relative to the reference half-axis (30, 36) intercepting the rotational axis (32, 38) of this wheel, the magnetic compensating torque and the individual magnetic positioning torque having a substantially 180° phase shift.

17. Timepiece, in particular a wristwatch, **characterised in that** it comprises a timepiece mechanism (1) according to any one of the preceding claims.

Fig. 1

Fig. 2

Fig. 3A

Fig. 3B

Fig. 4A

Fig. 4B

Fig. 5

Fig. 6

Fig. 7

Fig. 8

Fig. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 875409 A